**Europäisches Patentamt**

**European Patent Office**

**Office européen des brevets**

(19)

(11) Veröffentlichungsnummer: **0 088 041**
**B1**

(12) **EUROPÄISCHE PATENTSCHRIFT**

(45) Veröffentlichungstag der Patentschrift:
**14.08.85**

(21) Anmeldenummer: **83730012.8**

(22) Anmeldetag: **01.02.83**

(51) Int. Cl.⁴: **G 06 F 11/00**

(54) **Schaltungsanordnung zur Überwachung eines Mikroprozessors.**

(30) Priorität: **26.02.82 DE 3207633**

(43) Veröffentlichungstag der Anmeldung:
**07.09.83 Patentblatt 83/36**

(45) Bekanntmachung des Hinweises auf die Patenterteilung:
**14.08.85 Patentblatt 85/33**

(84) Benannte Vertragsstaaten:
**AT BE CH DE FR GB LI NL SE**

(56) Entgegenhaltungen:
**DE - A - 2 946 081**
**DE - B - 2 204 681**
**GB - A - 2 035 633**
**US - A - 3 566 368**
**US - A - 4 019 029**
**US - A - 4 072 852**

**PATENTS ABSTRACTS OF JAPAN, Band 6, Nr.**
**13 (P-99)(891), 26. Januar 1982**

(73) Patentinhaber: **Siemens Aktiengesellschaft, Berlin und München Wittelsbacherplatz 2, D-8000 München 2 (DE)**

(72) Erfinder: **Anders, Horst-Günther, Ing.-grad., Hoherzollerndamm 193, D-1000 Berlin 31 (DE)**
Erfinder: **Diepold-Scharnitzky, Rudolf, Ing.-grad., Waldenser Strasse 33, D-1000 Berlin 21 (DE)**

## Beschreibung

Die Erfindung bezieht sich auf eine Schaltungsanordnung zur Überwachung eines Mikroprozessors mit einer Binärzähler-Anordnung, die an einem Rücksetz-Eingang mit einem Ausgangssignal des Mikroprozessors beaufschlag ist, die an einem Zähl-Eingang mit dem Ausgangssignal eines Oszillators beaufschlagbar ist und bei der ein Ausgang und ein weiterer Ausgang direkt an eine Verknüpfungsschaltung angeschlossen sind, die ausgangsseitig mit einem Rücksetz-Eingang des Mikroprozessors verbunden ist.

Bei einer bekannten Schaltungsanordnung dieser Art (Patents Abstracts of Japan, Bd. 6, Nr. 13 (P-99) (891), 26. Januar 1982) besteht die Binärzähler-Anordnung aus zwei Binärzählern; der eine Binärzähler ist der Binärzähler des Mikroprozessors, der mit einem Initial-Impuls des Mikroprozessors an seinem Rücksetz-Eingang beaufschlagt ist. Ein weiterer Eingang des einen Dinärzählers ist an den Ausgang eines Oszillators angeschlossen. Von den beiden Ausgängen des einen Binärzählers ist ein Ausgang mit einer Verknüpfungsschaltung direkt verbunden, während der andere Ausgang mit einem Rücksetz-Eingang eines weiteren Binärzählers verbunden ist; ein weiterer Eingang des weiteren Binärzählers ist an den Oszillator angeschlossen. Der einzige Ausgang des weiteren Binärzählers ist mit der Verknüpfungsschaltung verbunden, die ausgangsseitig mit einem Rücksetz-Eingang des Mikroprozessors in Verbindung steht.

Bei einer anderen bekannten Schaltungsanordnung mit einem Mikroprozessor und einem Binärzähler (DE-OS 2946081) wird nach jedem vollständigen Durchlauf des Programms des Mikroprozessors ein sogenanntes CLEAR-Signal als Ausgangssignal für die Überwachung abgegeben. Das Ausgangssignal des Oszillators ist ein Taktsignal mit vorgegebener fester Frequenz, das zu einem Aufwärtszählen des Binärzählers führt. Jeweils am Ende eines Programmzyklusses wird bei der bekannten Anordnung somit anhand eines richtigen oder unrichtigen Zählerstandes die Funktionstüchtigkeit des Mikroprozessors geprüft.

Eine weitere bekannte Schaltungsanordnung (Rechenbaustein M 74005-A8810 des Siemens-Systems TELEPERM C) enthält eine retriggerbare monostabile Kippstufe, die mit ihrem Eingang an einem Prüfsignale abgebenden Ausgang des Mikroprozessors angeschlossen ist. Treten am Eingang der monostabilen Kippstufe die Prüfsignale nicht in dem vorgegebenen zeitlichen Abstand auf, dann wird die monostabile Kippstufe nicht retriggert, so dass sich an ihrem Ausgang eine Potentialänderung ergibt. Diese Potentialänderung wird nicht nur zum Rücksetzen des Mikroprozessors benutzt, indem diese Potentialänderung auf den Rücksetzeingang des Mikroprozessors gegeben wird, sondern es wird die Potentialänderung am Ausgang der monostabilen Kippstufe gleichzeitig als Fehlermeldung verwendet. Die Fehlermeldung gibt dann an, dass der Programmablauf des Mikroprozessors zeitlich nicht richtig erfolgt.

Ferner ist ein Verfahren zum selbsttätigen Überwachen von Zentraleinheiten programmgesteuerter Vermittlungsanlagen bekannt (DE-AS 2204681), bei dem die Zentraleinheiten eine Funktions-Selbstprüfung mit Ausgabe eines Quittungssignals nur dann durchführen, wenn ihre Belastung nicht zu stark ist. Um die Ursache für das Ausbleiben eines Quittungssignals ermitteln zu können, ist einer das Quittungssignal empfangenden, externen Überwachungseinrichtung ein Zähler zugeordnet, der nach Ausbleiben einer vorgegebenen Anzahl von Quittungssignalen ein Interrupt-Signal an die Zentraleinheit überträgt; die Zentraleinheit startet daraufhin die Funktions-Selbstprüfung. Bei positivem Verlauf wird ein Quittungssignal erzeugt, mit dem der Zähler zurückgestellt wird. Andernfalls wird auf eine Reserveeinheit umgeschaltet oder ein Fehleralarm gegeben.

Der Erfindung liegt die Aufgabe zugrunde, eine Schaltungsanordnung zur Überwachung eines Mikroprozessors vorzuschlagen, mit der mit vergleichsweise geringem Schaltungsaufwand eine Fehlersignalisierung davon abhängig gemacht werden kann, ob der Mikroprozessor nach Eingang eines Signals an seinem Rücksetz-Eingang wieder fehlerfrei anläuft oder ob es bei der Störung des Programmablaufs bleibt, worauf dann eine Signalgabe über den Fehler erfolgen soll.

Zur Lösung dieser Aufgabe ist bei einer Schaltungsanordnung der eingangs angegebenen Art erfindungsgemäss das Ausgangssignal des Mikroprozessors, mit dem die aus einem Binärzähler bestehende Binärzähler-Anordnung beaufschlagt ist, ein Prüfsignal, dessen Frequenz mit der des Ausgangssignals des Oszillators übereinstimmt, der Oszillator ist über einen Eingang eines Logik-Gliedes mit dem Zähleingang des Binärzählers verbunden und der weitere Ausgang des Binärzählers ist auch mit einem weiteren Eingang des Logik-Gliedes verbunden; an den weiteren Eingang des Logik-Gliedes ist ein Signalgeber angeschlossen. Bei dem die Prüfsignale abgebenden Ausgang des Mikroprozessors kann es sich um den Synchronisations-Ausgang handeln.

Ein Vorteil der erfindungsgemässen Schaltungsanordnung besteht darin, dass bei einer durch Ausbleiben der Prüfsignale gekennzeichneten Störung im Mikroprozessor der Rücksetz-Eingang des Prozessors zunächst nur vorübergehend für eine vorgegebene Zeit mit einem Signal beaufschlagt wird. Nach Ablauf dieser vorgegebenen Zeit wird die Schaltungsanordnung nach der Erfindung für die Prüfsignale des Mikroprozessors wieder empfänglich und unterlässt bei einem zeitrichtigen Wiederauftreten der Prüfsignale eine Fehlermeldung; es ist ein richtiger Wiederanlauf des Mikroprozessors eingetreten. Findet dagegen nach der vorgegebenen Zeit ein fehlerhafter Wiederanlauf oder gar kein Anlauf des Mikroprozessors statt, treten also Prüfsignale nicht in der erwarteten zeitlichen Folge auf, dann wird der Rücksetz-Eingang des Mikroprozessors ständig mit einem Rücksetz-Signal beaufschlagt und gleichzeitig eine Fehlermeldung vorgenommen. Diese Wirkungsweise der erfindungsgemässen Schaltungsanordnung ist in vorteilhafter Weise mit einem verhältnismässig geringen Schaltungsaufwand erreicht.

Zwar ist bereits für sich aus der US-PS 4072852 bekannt, dass bei einem Computer-Überwachungssystem periodische Testpulse von der Zentraleinheit des Computers ausgegeben werden, die die gleiche Frequenz wie die Taktsignale eines Oszillators aufweisen, jedoch wird hier zur Durchführung der Überwachungsfunktion ein zusätzlicher Adress-Code der Zentraleinheit herangezogen, der mit zusätzlichen Schaltungsmitteln entschlüsselt werden muss.

Bei der erfindungsgemässen Schaltungsanordnung können die Verknüpfungsschaltung und das Logik-Glied in unterschiedlichen Weise ausgebildet sein. Als vorteilhaft wird es angesehen, wenn sie ODER-Glieder sind.

Um dem Mikroprozessor im Falle einer vorübergehenden Störung eine ausreichende Zeit zu einem richtigen Wiederanlaufen zu gewähren, sind der eine Ausgang und der weitere Ausgang des Binärzählers vorteilhafterweise Ausgänge nicht benachtbarter Stufen. Als besonders vorteilhaft hat es sich erwiesen, wenn der eine Ausgang des Binärzählers der Ausgang seiner zweiten Zählstufe und der weitere Ausgang der Ausgang seiner vierten Zählstufe ist.

Nach den vorangegangenen Ausführungen dürfte aber verständlich sein, dass auch andere Ausgänge des Binärzählers in der angegebenen Weise mit dem weiteren Logik-Glied verbunden werden können.

Zur manuellen Aufhebung der im Fehlerfalle mit der erfindungsgemässen Schaltungsanordnung erreichten Dauerverriegelung ist vorteilhafterweise an den weiteren Eingang des einen Logik-Gliedes ein Schalter angeschlossen, über den ein das Logik-Glied für die Impulse des Oszillators öffnendes Potential anschliessbar ist.

Zur Erläuterung der Erfindung ist in

Fig. 1 ein Ausführungsbeispiel der erfindungsgemässen Schaltungsanordnung, in

Fig. 2 ein Diagramm bei fehlerfreiem Ablauf des Mikroprozessors, in

Fig. 3 ein weiteres Diagramm bei vorübergehendem Fehler und in

Fig. 4 ein Diagramm bei einem nicht behebbaren Fehler im Mikroprozessor dargestellt.

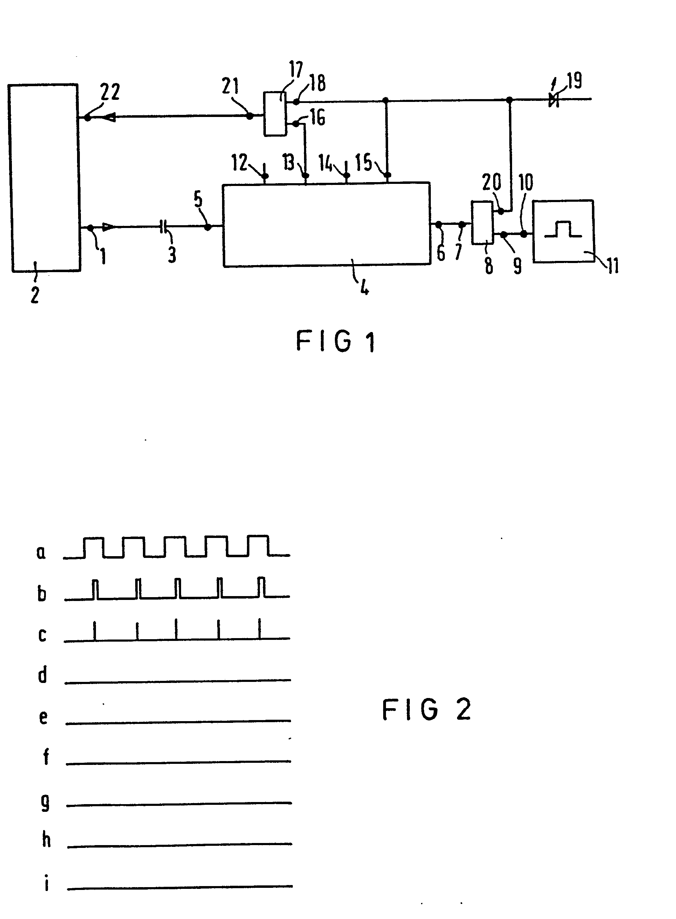

Bei dem Ausführungsbeispiel nach Fig. 1 ist an einem Prüfsignale abgebenden Ausgang 1 eines Mikroprozessors 2 über einen Kondensator 3 ein Binärzähler 4 mit seinem Rücksetz-Eingang 5 angeschlossen. Der Zähl-Eingang 6 ist mit einem Ausgang 7 eines Logik-Gliedes 8 verbunden, das im dargestellten Ausführungsbeispiel von einem ODER-Glied gebildet ist. Ein Eingang 9 des ODER-Gliedes 8 ist an den Ausgang 10 eines Oszillators 11 angeschlossen.

Der Binärzähler 4 weist bei dem dargestellten Ausführungsbeispiel vier Zählstufen und demzufolge vier Ausgänge 12, 13, 14 und 15 auf. Der Ausgang 13, der dem Ausgang der zweiten Zählstufe des Binärzählers 4 entspricht, ist mit einem Eingang 16 eines weiteren Logik-Gliedes 17 verbunden, das im dargestellten Ausführungsbeispiel ebenfalls als ODER-Glied ausgebildet ist. Ein weiterer Eingang 18 des ODER-Gliedes 17 ist mit dem Ausgang 15 der vierten Zählstufe des Binärzählers 4 verbunden. Ausserdem ist an dem weiteren Eingang 18 ein Signalgeber 19 sowie ein weiterer Eingang 20 des einen ODER-Gliedes 8 angeschlossen. Der Ausgang 21 des weiteren ODER-Gliedes 17 ist an den Rücksetz-Eingang 22 des Mikroprozessors 2 geführt.

Zur Erläuterung der Wirkungsweise der Schaltungsanordnung nach Fig. 1 wird zunächst auf das Diagramm nach Fig. 2 zurückgegriffen. In diesem Diagramm gibt der Kurvenzug a die Ausgangsimpulse des Oszillators 11 wieder, die über den Eingang 9 dem einen ODER-Glied 8 zugeführt werden. Die Frequenz der Ausgangssignale des Oszilators 11 ist dabei so gewählt, dass sie der Frequenz der am Ausgang 1 des Mikroprozessors auftretenden Prüfsignale entspricht; die Prüfsignale zeigt die Kurve b des Diagramms nach Fig. 2. Dabei ist sichergestellt, dass bei fehlerfreiem Programmablauf die Impulse nach Kurve b immer dann auftreten, wenn Ausgangsimpulse des Oszillators 11 vorhanden sind. Bei dieser Relation der Prüfsignale und der Ausgangsimpulse des Oszillators 11 kann der Binärzähler 4 nicht über den Zählerstand „0" hinauszählen, weil er durch die Prüfsignale jeweils sofort zurückgestellt wird. Dies ist auf die Impulse nach der Kurve c zurückzuführen, die aus den Prüfsignalen abgeleitet sind. Sowohl am Ausgang 12 des Binärzählers 4 (vgl. Kurve d) als auch an den übrigen Ausgängen 13 bis 15 (vgl. Kurven e bis g) treten dann keine Signale auf, so dass auch am Rücksetz-Eingang 22 des Mikroprozessors 2 (Kurve h) ein Signal nicht auftritt. Auch der Signalgeber 19 zeigt einen Fehler nicht an (Kurve i).

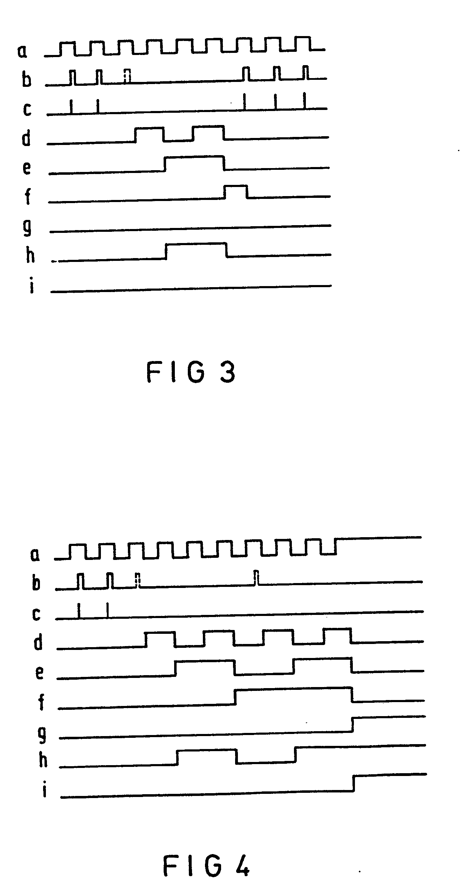

Bleibt dagegen — wie in Fig. 3 angenommen — das dritte Prüfsignal aus (siehe Kurve b in Fig. 3), dann erfolgt auch kein Rückstellen des Binärzählers 4, weil das entsprechende Signal (siehe Kurve c) ausbleibt. Entsprechend den eingezählten Ausgangsimpulsen des Oszillators 11 verändert sich somit das Potential am Ausgang 12 des Binärzählers 4 (vgl. Kurve d) und auch das Potential am Ausgang 13 (siehe Kurve e). Schliesslich wird auch das Potential am Ausgang 14 (Kurve f) verändert. Infolge des Signals am Ausgang 13 wird der Rücksetz-Eingang 22 (Kurve h nach Fig. 3) mit einem Signal beaufschlagt und damit der Mikroprozessor 2 zurückgesetzt. Beginnt daraufhin ein richtiger Wiederanlauf, der durch das erneute Auftreten eines Impulses in der Kurve b gekennzeichnet ist, dann wird aufgrund eines Signals nach Kurve c der Binärzähler 4 wieder zurückgesetzt, wodurch alle Ausgänge des Binärzählers 4 in ihren Ausgangszustand zurückfallen. Der Signalgeber 19 hat in diesem Falle nicht angesprochen, wie aus Kurve i nach Fig. 3 hervorgeht.

Im Diagramm nach Fig. 4 ist zunächst der gleiche Fehlerverlauf unterstellt, so dass auch hier zunächst infolge Ausbleibens der Prüfsignale ein Signal auf dem Rücksetz-Eingang 22 des Mikroprozessors gegeben wird. Dieses Signal hat aber — das wird bei der Erläuterung der Fig. 4 unterstellt — nicht zu einem richtigen Wiederanlauf des Mikroprozessors geführt, so dass weitere Prüfsignale nicht auftreten. Infolgedessen zählt nunmehr der Binärzähler 4 weiter, und zwar so lange, bis auch an seinem Ausgang 15 (vgl. Kurve g nach Fig. 4) eine Potentialänderung eintritt. Durch diese Potentialänderung wird nicht nur dauerhaft auf den Rücksetz-Eingang 22 des Mikroprozessors 2 ein Signal gegeben, sondern es wird darüber hinaus das ODER-Glied 8 gesperrt, weil an dessen weiterem Eingang 20 eine bleibende Potentialänderung eintritt; über das ODER-Glied 8 können weitere Impulse vom Oszillator 11 nicht in den Binärzähler 4 eingezählt werden. Ausserdem bewirkt eine Potentialänderung am Ausgang 15 des Binärzählers 4 eine Signalgabe durch den Signalgeber 19, wodurch ein nicht behebbarer Fehler im Mikroprozessor 2 angezeigt wird.

Die somit erreichte Dauerverriegelung lässt sich beispielsweise bei Bedarf dadurch aufheben, dass ein in der Fig. 1 nicht dargestellter Schalter an den weiteren Eingang 18 des weiteren ODER-Gliedes 17 angeschlossen wird, über den dann ein das eine ODER-Glied 8 für die Impulse des Oszillators 11 öffnendes Potential angeschlossen werden kann.

## Patentansprüche

1. Schaltungsanordnung zur Überwachung eines Mikroprozessors, mit
— einer Binärzähler-Anordnung (4), die an einem Rücksetz-Eingang (5) mit einem Ausgangssignal des Mikroprozessors (2) beaufschlagt ist, die an einem Zähl-Eingang (6) mit dem Ausgangssignal eines Oszillators (11) beaufschlagbar ist und bei der ein Ausgang (13) und ein weiterer Ausgang (15) direkt an eine Verknüpfungsschaltung (17) angeschlossen sind, die ausgangsseitig mit einem Rücksetz-Eingang (22) des Mikroprozessors (2) verbunden ist, dadurch gekennzeichnet, dass
— das Ausgangssignal des Mikroprozessors (2), mit dem die aus einem Binärzähler (4) bestehende Binärzähler-Anordnung beaufschlagt ist, ein Prüfsignal ist, dessen Frequenz mit der des Ausgangssignals des Oszillators (11) übereinstimmt,
— der Oszillator (11) über einen Eingang (9) eines Logik-Gliedes (8) mit dem Zähleingang (6) des Binärzählers (4) verbunden ist, und
— der weitere Ausgang (15) des Binärzählers (4) auch mit einem weiteren Eingang (20) des Logik-Gliedes (8) verbunden ist und an den weiteren Eingang (20) des Logik-Gliedes (8) ein Signalgeber (19) angeschlossen ist.

2. Schaltungsanordnung nach Anspruch 1, dadurch gekennzeichnet, dass das Logik-Glied und die Verknüpfungsschaltung ODER-Glieder (8, 17) sind.

3. Schaltungsanordnung nach Anspruch 1 oder 2, dadurch gekennzeichnet, dass der eine Ausgang (13) und der weitere Ausgang (15) Ausgänge nicht benachbarter Stufen des Binärzählers (4) sind.

4. Schaltungsanordnung nach Anspruch 3, dadurch gekennzeichnet, dass der eine Ausgang des Binärzählers (4) der Ausgang (13) seiner zweiten Zählstufe und der weitere Ausgang der Ausgang (15) seiner vierten Zählstufe ist.

5. Schaltungsanordnung nach einem der vorangehenden Ansprüche, dadurch gekennzeichnet, dass an den weiteren Eingang des einen Logik-Gliedes ein Schalter angeschlossen ist, über den ein das eine Logik-Glied für die Impulse des Oszillators öffnendes Potential anschliessbar ist.

## Claims

1. A circuit arrangement for monitoring a microprocessor, with
— a binary counter arrangement (4) which is acted upon, at a reset input (5), by an output signal from the microprocessor (2), which can be acted upon at a counting input (6) by the input signal of an oscillator (11), and wherein an output (13) and a further output (15) are directly connected to a logic-linking circuit (17) which is connected at its output end to a reset input (22) of the microprocessor (2), characterised in that
— the output signal of the microprocessor (2), by which the binary counter arrangement comprising a binary counter (4) is acted upon, is a test signal whose frequency conforms with that of the output signal of the oscillator (11),
— the oscillator (11) is connected via an input (9) of a logic element (8) to the counting input (6) of the binary counter (4) and
— the further output (15) of the binary counter (4) is also connected to a further input (20) of the logic element (8) and a signal generator (19) is connected to the further input (20) of the logic element (8).

2. A circuit arrangement as claimed in Claim 1, characterised in that the logic element and the logic-linking circuit are OR-gates (8, 17).

3. A circuit arrangement as claimed in Claim 1 or 2, characterised in that the first output (13) and the further output (15) are outputs of non-adjacent stages of the binary counter (4).

4. A circuit arrangement as claimed in Claim 3, characterised in that the first output of the binary counter (4) is the output (13) of its second counting stage, and the further output is the output (15) of its fourth counting stage.

5. A circuit arrangement as claimed in one of the preceding claims, characterised in that the further input of the first logic element is connected to a switch via which it is possible to connect a potential which opens the first logic element for the pulses of the oscillator.

## Revendications

1. Montage pour le contrôle d'un microprocesseur comportant:

— un dispositif à compteur binaire (4), qui est chargé à une entrée de remise à l'état initial (5) par un signal de sortie du microprocesseur (2), qui est susceptible d'être chargé, à une entrée de comptage (6), par le signal de sortie d'un oscillateur (11), et dans lequel une première sortie (13) et une seconde sortie (15) sont reliées directement à un circuit combinatoire (17) qui est relié, côté sortie, avec une entrée de remise à l'état initial (22) du microprocesseur (2), caractérisé par le fait que

— le signal de sortie du microprocesseur (2), avec lequel est chargé le dispositif à compteur binaire constitué par un compteur binaire (4), est un signal de contrôle dont la fréquence coïncide avec celle du signal de sortie de l'oscillateur (11),

— l'oscillateur (11) est relié, par l'intermédiaire d'une entrée (9) d'un circuit logique (8), à l'entrée de comptage du compteur binaire (4),

— la seconde sortie (15) du compteur binaire (4) est également reliée à une seconde entrée (20) du circuit logique (8), alors qu'à la seconde entrée (20) du circuit logique (8) est relié un générateur de signaux (19).

2. Montage selon la revendication 1, caractérisé par le fait que le circuit logique et le circuit combinatoire sont des circuits OU (8, 17).

3. Montage selon l'une des revendications 1 ou 2, caractérisé par le fait que la première sortie (13) et la seconde sortie (15) sont des sorties d'étages non voisins du compteur binaire (4).

4. Montage selon la revendication 3, caractérisé par le fait que la première sortie du compteur binaire (4) est la sortie (13) de son second étage de comptage, et que la seconde sortie est la sortie (15) de son quatrième étage de comptage.

5. Montage selon l'une des revendications précédentes, caractérisé par le fait qu'à la seconde entrée dudit circuit logique est relié un commutateur par l'intermédiaire duquel est susceptible d'être appliqué un potentiel ouvrant ledit circuit logique pour des impulsions de l'oscillateur.

FIG 1

FIG 2

FIG 3

FIG 4